# EUROPÄISCHE PATENTSCHRIFT

(11) **EP 3 880 890 B1**
(45) Veröffentlichungstag und Bekanntmachung des Hinweises auf die Patenterteilung: **02.08.2023**
(21) Anmeldenummer: 19805924.8
(22) Anmeldetag: 13.11.2019
(51) Int. Cl.: E02D 3/12, E02D 5/46

(54) **VERFAHREN UND VORRICHTUNG ZUR BILDUNG VON BINDEMITTEL-BODEN-GEMISCH-KÖRPERN**
METHOD AND DEVICE FOR INJECTING SOILS
PROCEDÉM ET DISPOSITIF POUR L'INJECTION D'UN SOL

(30) Priorität: 14.11.2018 AT 509922018
(43) Veröffentlichungstag der Anmeldung: 22.09.2021
(73) Patentinhaber: Porr Bau GmbH, 1100 Wien (AT)
(72) Erfinder: GÖRGL, David, 4060 Leonding (AT); GABLER-MOSTLER, Johann, 3382 Dunkelsteinerwald (AT); RAUCH, Christian, 4030 Linz (AT)
(74) Vertreter: Puchberger & Partner Patentanwälte
(86) Internationale Anmeldenummer: PCT/EP2019/081193
(87) Internationale Veröffentlichungsnummer: WO 2020/099496

(56) Entgegenhaltungen:
- DE-A1- 3 712 151
- DE-C1- 19 842 072
- GB-A- 1 518 463
- GB-A- 2 135 721

## Beschreibung

Die Erfindung betrifft ein Verfahren nach Anspruch 1 zur Bildung, insbesondere langgestreckter, verfestigter Bindemittel-Boden-Gemisch-Körper, insbesondere zur Bildung von Baugrubenumschließungen nach dem Düsenstrahlverfahren. Ferner betrifft die Erfindung eine Injektionsanordnung mach Anspruch 9 zur Bildung von Bindemittel-Boden-Gemisch-Körpern.

Derartige langgestreckte verfestigte Bindemittel-Boden-Gemisch-Körper, insbesondere nach dem Düsenstrahlverfahren (DSV-Verfahren) hergestellte Zement- oder Betonkörper, werden im Stand der Technik zur Befestigung von Bodenbereichen eingesetzt. Neben der Bildung von Baugrubenumschließungen werden derartige Bindemittel-Boden-Gemisch-Körper beispielsweise auch zur Herstellung von horizontalen Dichtsohlen, vertikalen Dichtwänden, Dichtwannen und für Abdichtungsmaßnahmen im Tunnelbau eingesetzt. Insbesondere können derartige Bindemittel-Boden-Gemisch-Körper als DSV-Körper bezeichnet werden.

Üblicherweise wird die Injektionslanze in den zu bearbeitenden Bodenbereich eingebohrt. Das Einführen kann dabei je nach Anwendungszweck in jede beliebige Raumrichtung erfolgen, also horizontal, vertikal und in jedem beliebigen Neigungswinkel. Nach dem Einführen der Injektionslanze in die gewünschte Tiefe wird aus der Injektionslanze ein Bindemittel, insbesondere eine Bindemittelsuspension, ausgegeben, welche sich sodann mit dem umliegenden Bodenmaterial vermischt und ein Bindemittel-Boden-Gemisch bildet.

Im Stand der Technik -wie durch DE37 121 51 A oder DE 198 42072 C belegtsind verschiedene Bindemittel bekannt, wobei bevorzugt Bindemittelsuspensionen und insbesondere Zement-Wasser-Suspensionen als Bindemittel verwendet werden. Derartige Bindemittel sind insbesondere Mittel, die durch einen chemischen, physikalischen oder physikochemischen Aushärteprozess von flüssigen in den festen Aggregatzustand übergeführt werden können.

Vorzugsweise erfolgt im Stand der Technik die Ausgabe des Bindemittels in Form eines mit Druck beaufschlagten Bindemittelstrahls, um das ausgegebene Bindemittel besser mit dem Bodenmaterial vermischen zu können.

Die Einbringung des Bindemittels in den die Injektionslanze umgebenden Bodenbereich wird im Stand der Technik während des Herausziehens der Injektionslanze aus dem Boden vorgenommen, wodurch das Bindemittel in einem langgestreckten Bereich angeordnet werden kann. Durch die Vermischung des Bindemittels mit dem Bodenmaterial wird ein langgestreckter Bereich aus einem Bindemittel-Boden-Gemisch gebildet. Nach vollständigem Entfernen der Injektionslanze aus dem Boden erfolgt die Aushärtung bzw. Verfestigung des Bindemittel-Boden-Gemischs, wodurch ein langgestreckter verfestigter Bindemittel-Boden-Gemisch-Körper gebildet wird. Dieser verfestigte Bindemittel-Boden-Gemisch-Körper stabilisiert somit den umgebenden Bodenbereich, wodurch beispielsweise Baugrubenumschließungen gebildet und insbesondere stabilisiert werden können.

Ein Nachteil bei der Bildung derartiger DSV-Körper ergibt sich, wenn der Bodenbereich, in den das Bindemittel eingebracht wird bzw. wurde, sehr wasserhaltig ist bzw. wenn in diesem ein dauerhafter Wasserstrom vorhanden ist. Dies kann beispielsweise im Nahbereich von fließenden Gewässern der Fall sein, oder wenn der zu bildende DSV-Körper wenigstens teilweise unterhalb des Grundwasserpegels angeordnet sein soll. Es kann dann zu einem Auswaschen des noch nicht verfestigten Bindemittels kommen, wodurch die Bildung von durchgehenden langgestreckten Bindemittel-Boden-Gemisch-Körpern behindert werden kann.

Es ist nun eine Aufgabe der vorliegenden Erfindung, ein Verfahren und eine Injektionsanordnung zu schaffen, die die oben genannten Nachteile des Standes der Technik überwindet, und die es ermöglicht, verfestigte Bindemittel-Boden-Gemisch-Körper, insbesondere DSV-Körper, zu bilden, die insbesondere in stark wasserhaltigen bzw. wasserführenden Bodenbereichen eine erhöhte Stabilität aufweisen.

Die erfindungsgemäße Aufgabe wird durch ein Verfahren und eine Injektionsanordnung mit den Merkmalen der unabhängigen Patentansprüche 1, respektive 9, gelöst.

Insbesondere stellt die vorliegende Erfindung ein Verfahren zur Bildung verfestigter Bindemittel-Boden-Gemisch-Körper, insbesondere zur Bildung von Baugrubenumschließungen nach dem Düsenstrahlverfahren, bereit, welches die folgenden Schritte umfasst:
a) Einführen, insbesondere Einbohren, einer Injektionslanze in den Boden,
b) anschließendes Zurückziehen der Injektionslanze aus dem Boden und gleichzeitiges Einbringen eines Bindemittels, insbesondere einer Bindemittelsuspension, in das entlang des Zurückziehweges umliegende Bodenmaterial, wodurch im Boden ein Abschnitt einer Mischung aus Bindemittel und Bodenmaterial gebildet wird.

Erfindungsgemäß ist vorgesehen, dass dem Bindemittel und/oder dem Bindemittel-Boden-Gemisch ein viskositätserhöhender, nicht aushärtungsbeschleunigender, also nicht der Aushärtung der Grundmasse beschleunigender Viskositätsregulator, beigemengt wird.

Ferner stellt die Erfindung auch eine Injektionsanordnung zur Bildung verfestigter Bindemittel-Boden-Gemisch-Körper, insbesondere zur Bildung von Baugrubenumschließungen nach dem Düsenstrahlverfahren, bereit, welche folgende Elemente umfasst:
- Eine Injektionslanze mit einer Bohrkrone zur Einführung und insbesondere zur Einbohrung der Injektionslanze in den Boden und
- eine entlang der Injektionslanze verlaufende und in eine Bindemittelausgabedüse mündende Bindemittelleitung zur Zuführung eines Bindemittels, insbesondere einer Bindemittelsuspension.

Erfindungsgemäß ist eine getrennt von der Bindemittelleitung entlang der Injektionslanze verlaufende und in eine Beimengdüse mündende Viskositätsregulatorleitung vorgesehen. Bevorzugt ist diese Viskositätsregulatorleitung zur Beimengung eines Viskositätsregulators in das Bindemittel und/oder in das Bindemittel-Boden-Gemisch vorgesehen. Bevorzugt wird der Viskositätsregulator mit Luft gefördert.

Gegebenenfalls betrifft die Erfindung ein Verfahren zur Bildung, verfestigter Bindemittel-Boden-Gemisch-Körper, die gegebenenfalls langgestreckt ausgebildet sind, insbesondere zur Bildung von Baugrubenumschließungen nach dem Düsenstrahlverfahren, umfassend folgende Schritte:
a) Einführen, insbesondere Einbohren, einer Injektionslanze in den Boden,
b) anschließendes Zurückziehen der Injektionslanze aus dem Boden und gleichzeitiges Einbringen eines Bindemittels, insbesondere einer Bindemittelsuspension, in das entlang des Zurückziehweges umliegende Bodenmaterial, wodurch im Boden ein langgestreckter Abschnitt einer Mischung aus Bindemittel und Bodenmaterial gebildet wird.

Erfindungsgemäß ist vorgesehen, dass dem Bindemittel und/oder dem Bindemittel-Boden-Gemisch ein viskositätserhöhender, nicht-aushärtungsbeschleunigender, also nicht die Aushärtung der Grundmasse beschleunigender, Viskositätsregulator beigemengt wird.

Weiter ist gemäß der Erfindung vorgesehen, dass das Bindemittel mit oder in einem Hochdruckstrahl aus der Injektionslanze in den Boden eingebracht wird, um das Bindemittel mit dem Bodenmaterial zu vermischen.

Gegebenenfalls kann vorgesehen sein, dass ein den Bindemittelstrahl ummantelnder Druckluftstrahl aus der Injektionslanze ausgegeben wird, und dass der Viskositätsregulator mit dem Druckluftstrom vorzugsweise als Aerosol eingebracht wird. Gegebenenfalls kann vorgesehen sein, dass der Viskositätsregulator dem Druckluftstrahl in einem Volumenstrom zugeführt wird, der 0,5-5 (vol)% des gleichzeitig geförderten Volumenstroms der Bindermittelsuspension beträgt.

Gegebenenfalls kann vorgesehen sein, dass der Viskositätsregulator dem Druckluftstrahl mit einem Volumenstrom von 0,5 l/min bis 30 l/min, insbesondere von 1 l/min bis 10 l/min, vorzugsweise von 2 l/min bis 5 l/min beigemengt wird, wobei der Volumenstrom der Bindemittelsuspension vorzugsweise 200l/min bis 400l/min beträgt. Gegebenenfalls kann vorgesehen sein, dass der Druck der Druckluft zur Bildung des Druckluftstrahls 1 bar bis 30 bar beträgt.

Gegebenenfalls kann vorgesehen sein, dass der Druck des Bindemittels zur Bildung des Hochdruckstrahls 100 bar bis 500 bar, insbesondere 300 bar bis 400 bar beträgt. Gegebenenfalls kann vorgesehen sein, dass das Bindemittel ein Zement-Wasser-Gemisch ist oder umfasst.

Gegebenenfalls kann vorgesehen sein, dass das umliegende Bodenmaterial beim Einführen und/oder beim Zurückziehen der Injektionslanze aufgelockert wird.

Gegebenenfalls kann vorgesehen sein, dass der Viskositätsregulator aus Gelbildnern, modifizierter Stärke, Carboxymethylcellulose, Bentonit, Acrylatdispersion, modifizierten Polyacrylaten, Polyurethanen oder Polyethern besteht oder diese enthält. Gegebenenfalls kann vorgesehen sein, dass der Viskositätsregulator aus einer Acrylatdispersion besteht, wobei die Acrylatdispersion 1 Gew.-% bis 20 Gew.-%, insbesondere 2 Gew.-% bis 10 Gew. % Acrylatpolymer enthält.

Gegebenenfalls betrifft die Erfindung eine Injektionsanordnung zur Bildung, insbesondere langgestreckter, verfestigter Bindemittel-Boden-Gemisch-Körper, insbesondere zur Bildung von Baugrubenumschließungen nach dem Düsenstrahlverfahren, umfassend:
- eine Injektionslanze mit einer Bohrkrone zur Einführung und insbesondere zur Einbohrung der Injektionslanze in den Boden,
- und eine entlang der Injektionslanze verlaufende und in eine Bindemittelausgabedüse mündende Bindemittelleitung zur Zuführung eines Bindemittels, insbesondere einer Bindemittelsuspension,

Erfindungsgemäß ist es vorgesehen, dass eine getrennt von der Bindemittelleitung entlang der Injektionslanze verlaufende und in eine Beimengdüse mündende Viskositätsregulatorleitung zur Beimengung eines Viskositätsregulators in das Bindemittel und/oder in das Bindemittel-Boden-Gemisch vorgesehen ist. Gegebenenfalls kann vorgesehen sein, dass eine getrennt von der Bindemittelleitung entlang der Injektionslanze verlaufende und in die Beimengdüse mündende Druckluftleitung vorgesehen ist.

Gegebenenfalls kann vorgesehen sein, dass die Druckluftleitung gleichzeitig auch die Viskositätsregulatorleitung bildet, und dass in der als Viskositätsregulatorleitung wirkenden Druckluftleitung eine Mischung aus Druckluft und Viskositätsregulator, insbesondere ein Aerosol des Viskositätsregulators, gefördert wird.

Gegebenenfalls kann vorgesehen sein, dass der Viskositätsregulator aus Gelbildnern, modifizierter Stärke, Carboxymethylcellulose, Bentonit, Acrylatdispersion, modifizierten Polyacrylaten, Polyurethanen oder Polyethern besteht oder diese enthält.

Gegebenenfalls kann vorgesehen sein, dass der Viskositätsregulator aus einer Acrylatdispersion besteht, wobei die Acrylatdispersion 1 Gew.-% bis 20 Gew.-%, insbesondere 2 Gew.-% bis 10 Gew. % Acrylatpolymer enthält.

Gegebenenfalls kann vorgesehen sein, dass eine Zerstäubungsvorrichtung zur Bildung eines Viskositätsregulator-Aerosols vorgesehen ist, und dass die als Viskositätsregulatorleitung wirkende Druckluftleitung eine Zumischöffnung zur Einbringung des Viskositätsregulators aufweist.

Gegebenenfalls kann vorgesehen sein, dass die Bindemittelausgabedüse derart angeordnet ist, dass eine Ausgabe des Bindemittels, insbesondere der Bindemittelsuspension, quer zur Längserstreckungsrichtung der Injektionslanze erfolgt.

Durch die viskositätserhöhende Wirkung des Viskositätsregulators wird ein Auswaschen des Bindemittels in die gegebenenfalls im Boden vorhandene Flüssigkeit verhindert oder zumindest verringert. Erfindungsgemäß erhöht der Viskositätsregulator die Viskosität des Bindemittels, er wirkt jedoch nicht aushärtungsbeschleunigend. Der Viskositätsregulator beschleunigt also nicht die Aushärtung der Grundmasse. Dies ist insbesondere vorteilhaft, da es anderenfalls zu einer Aushärtung des Bindemittels in der Zuführleitung oder in der Düse kommen könnte.

Bevorzugt können als Viskositätsregulator Gelbildner, modifizierte Stärke, Carboxymethylcellulose, Bentonit, Acrylatdispersion, modifizierte Polyacrylate, Polyurethane oder Polyether verwendet werden. Gegebenenfalls kann als Viskositätsregulator auch eine Mischung dieser Mittel verwendet werden.

Zur Bildung von Bindemittel-Boden-Gemisch-Körpern, insbesondere DSV-Körpern, unter Verwendung eines erfindungsgemäßen Verfahrens bzw. einer erfindungsgemäßen Injektionsanordnung wird die Injektionslanze in den zu bearbeitenden Boden eingeführt. Bevorzugt erfolgt das Einführen der Injektionslanze durch Einbohren. Insbesondere kann die Injektionslanze an Ihrer Spitze dann eine Bohrkrone, bevorzugt eine rotierende Bohrkrone, aufweisen. Alternativ kann das Einführen mit jedem beliebigen Verfahren erfolgen, das zu diesem Zweck geeignet sind.

Wurde die Injektionslanze bis zur gewünschten Tiefe in den Boden eingeführt, wird diese unter gleichzeitiger Ausgabe des Bindemittels wieder aus dem Boden zurückgezogen. Üblicherweise wird die Injektionslanze vollständig aus dem Boden herausgezogen, um die Bearbeitung eines weiteren Bodenabschnitts zu ermöglichen. Gegebenenfalls kann die Injektionslanze nur teilweise aus dem Boden gezogen werden. Gegebenenfalls kann auch nur entlang eines Teils des Zurückziehweges oder entlang mehrerer Teile des Zurückziehweges das Bindemittel und/oder der Viskositätsregulator ausgegeben werden.

Um eine optimale Mischung des Bindemittels mit dem Bodenmaterial zu erreichen, kann vorgesehen sein, dass das Bindemittel als Hochdruckstrahl aus der Injektionslanze austritt. Durch die hohe Energiedichte des Strahls kommt es in der Regel zu einer Auflockerung des umliegenden Bodenmaterials und zu einer Vermischung des Bindemittels mit dem Bodenmaterial. Wird als Bindemittel eine Zement-Wasser-Suspension verwendet, kann so aus dem Bindemittel-Boden-Gemisch ein betonähnlicher Körper hergestellt werden, da das durch den Hochdruckstrahl aufgelockerte und mit dem Bindemittel vermischte Bodenmaterial als Zuschlag wirkt.

Gegebenenfalls kann vorgesehen sein, dass die Injektionslanze während der Ausgabe des Bindemittels rotiert, um eine gleichmäßige Verteilung des Bindemittels im Boden zu ermöglichen.

Um seine Wirkung entfalten zu können, ist es nicht notwendig, den Viskositätsregulator vollständig mit dem Bindemittel zu vermischen. Insbesondere kann es vorteilhaft sein, wenn der Viskositätsregulator nur im Mantelbereich des Bindemittelstrahls angeordnet ist oder ausgegeben wird und somit dort in hohen Konzentrationen vorliegt. Deshalb kann gegebenenfalls vorgesehen sein, dass der in dem Boden eingebrachte Bindemittelstrahl von einem Druckluftstrahl umgeben ist, wobei der Viskositätsregulator dem Druckluftstrahl beigemengt werden kann oder ist. Gegebenenfalls kann der Druckluftstrahl den Bindemittelstrahl ummanteln. Um den üblicherweise flüssigen oder festen Viskositätsregulator mit dem Druckluftstrahl zu vermischen, kann vorgesehen sein, dass der Viskositätsregulator in Form eines Aerosols in den Druckluftstrom eingebracht wird oder dass der Viskositätsregulator und der Druckluftstrom ein Aerosol bilden. Dadurch kann in bevorzugter Weise eine den Bindemittelstrahl ummantelnde Schicht an Viskositätsregulator gebildet werden. Trifft der vom Druckluftstrahl ummantelte Bindemittelstrahl auf das Bodenmaterial, kommt es gegebenenfalls zu einer im Wesentlichen vollständigen Durchmischung aller Komponenten, also insbesondere des Bodenmaterials, des Bindemittels und des Viskositätsregulators.

Durch die Zuführung des Viskositätsregulators in einem den Bindemittelstrahl umgebenden Druckluftstrahl ergibt sich der Vorteil, dass das Bindemittel erst direkt vor dem Kontakt mit dem Bodenmaterial mit dem Viskositätsregulator in Kontakt gebracht wird. Dadurch kann erreicht werden, dass das Pumpverhalten bzw. das Förderverhalten des Bindemittels im Gegensatz zur Verwendung ohne Viskositätsregulator nicht verändert wird. Somit wird beispielsweise keine höhere Pumpleistung benötigt.

Bevorzugt kann bei der erfindungsgemäßen Injektionsanordnung also vorgesehen sein, dass eine Druckluftleitung vorgesehen ist, die getrennt von der Bindemittelleitung verläuft. Die Druckluft kann durch eine Beimengdüse mit dem Bindemittel vermischt werden bzw. den Bindemittelstrahl ummanteln. Bevorzugt kann die Druckluftleitung als Viskositätsregulatorleitung wirken, wobei der Viskositätsregulator in die Druckluftleitung eingebracht werden kann. Gegebenenfalls kann der Viskositätsregulator in der Viskositätsregulatorleitung oder in der als Viskositätsregulatorleitung wirkenden Druckluftleitung bewegt angeordnet sein, insbesondere gefördert werden. Gegebenenfalls kann die Druckluft in der Druckluftleitung bewegt angeordnet sein, insbesondere gefördert werden. Gegebenenfalls kann die Viskositätsregulatorleitung oder die als Viskositätsregulatorleitung wirkende Druckluftleitung den Viskositätsregulator fördern. Gegebenenfalls kann die Druckluftleitung die Druckluft fördern.

Bevorzugt kann die Einbringung des Viskositätsregulators in die Druckluftleitung als Aerosol erfolgen, wobei dann gegebenenfalls eine Zerstäubungsvorrichtung zur Erzeugung des Aerosols vorgesehen sein kann. Die Zerstäubungsvorrichtung kann als beliebiger Zerstäuber ausgebildet sein, der die Bildung eines Viskositätsregulator-Aerosols ermöglicht. Bevorzugt kann die Zerstäubungsvorrichtung als Zerstäubungsdüse ausgebildet sein. Gegebenenfalls kann die Zerstäubung durch Druckluft unterstützt sein, oder die Zerstäubung kann durch eine Druckbeaufschlagung des Viskositätsregulators selbst erfolgen.

Die Zufuhr des Viskositätsregulators kann aus einer externen Speichervorrichtung, beispielsweise aus einem Lagerbehälter erfolgen. Die gegebenenfalls vorgesehen Beimengung des Viskositätsregulators in die Druckluft bzw. in die Druckluftleitung erfolgt bevorzugt außerhalb des Bodens, insbesondere im Bereich des hinteren Endes der Injektionslanze und/oder in jenem Bereich, in dem die Leitung eines Kompressors zur Erzeugung der Druckluft in die Injektionslanze mündet. Gegebenenfalls wird der Viskositätsregulator in die Leitung des Kompressors zu Erzeugung der Druckluft eingebracht.

Die Bindemittelleitung und die Druckluftleitung können alternativ über den Bereich der Injektionslanze als getrennte Leitungen verlaufen. Dabei können die Leitungen als nebeneinander verlaufende Leitungen ausgeführt sein. Die Leitungen können auch als konzentrisch angeordnete Leitungen ausgeführt sein. Die Beimischung der Druckluft und des Viskositätsregulators kann durch eine Beimengdüse erfolgen. Die Beimengdüse kann gegebenenfalls einstückig mit der Bindemittelausgabedüse ausgebildet sein, wobei der Druckluftstrahl bevorzugt einen den Bindemittelstrahl umgebenden Mantelstrom bilden kann.

Weitere Merkmale der Erfindung ergeben sich aus den Figuren, den Ausführungsbeispielen sowie aus den Patentansprüchen.

Im Folgenden wird die Erfindung anhand eines exemplarischen Ausführungsbeispiels im Detail erläutert.

Es zeigen:
Fig. 1 eine schematische Ansicht eines Ausführungsbeispiels einer erfindungsgemäßen Injektionsanordnung im Betriebszustand;
Fig. 2 eine schematische Schnittansicht eines Ausführungsbeispiels einer erfindungsgemäßen Injektionsanordnung; und
Fig. 3 eine Detailansicht der erfindungsgemäßen Injektionsanordnung aus Fig. 2 im Bereich der Bindemittelausgabedüse.

Wenn nicht anders bezeichnet, zeigen die Figuren die folgenden Teile: Injektionsanordnung 1, Injektionslanze 2, Bohrkrone 3, Bindemittelausgabedüse 4, Bindemittelleitung 5, Beimengdüse 6, Viskositätsregulatorleitung 7, Druckluftleitung 8, Bohrstange 9, Bindemittelreservoir 10, Viskositätsregulatorreservoir 11, Kompressor 12, Boden 13, Rotationsrichtung 14, Bindemittel-Bodengemisch-Körper 15, Zumischöffnung 16, Fahrzeug 17, Zurückziehweg 18, Druckluftstrahl 19, Bindemittelstrahl 20.

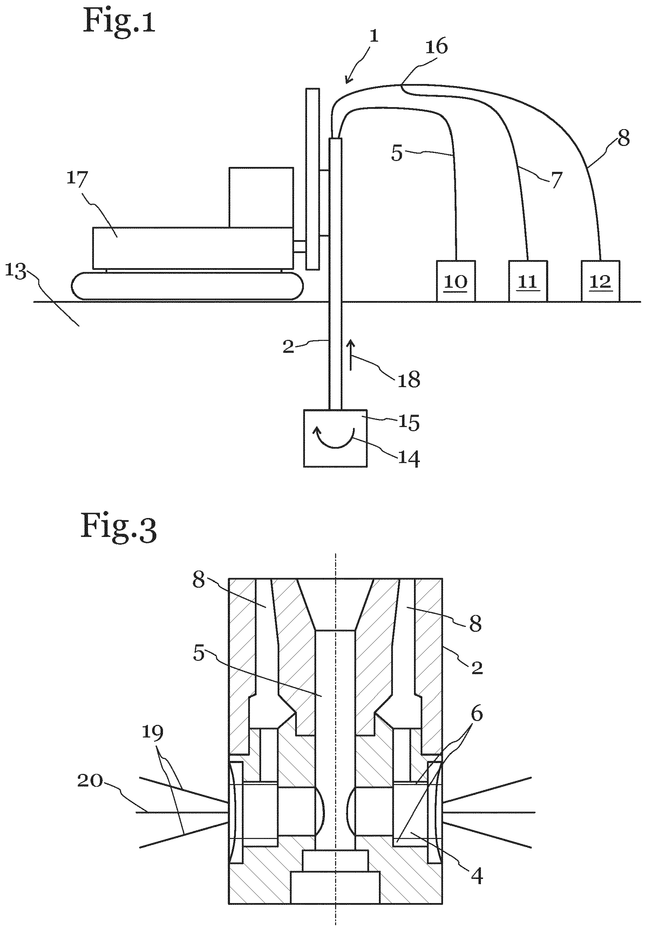

Fig. 1 zeigt ein exemplarisches Ausführungsbeispiel einer erfindungsgemäßen Injektionsanordnung 1 im Betriebszustand. Die Injektionsanordnung 1 ist an einem Fahrzeug 17 angeordnet. Die Injektionslanze 2 der Injektionsanordnung 1 wird in den Boden 13 eingebohrt. Hat die Injektionslanze 2 die gewünschte Tiefe erreicht, wird diese entlang des Zurückziehweges 18 wieder aus dem Boden 13 gezogen.

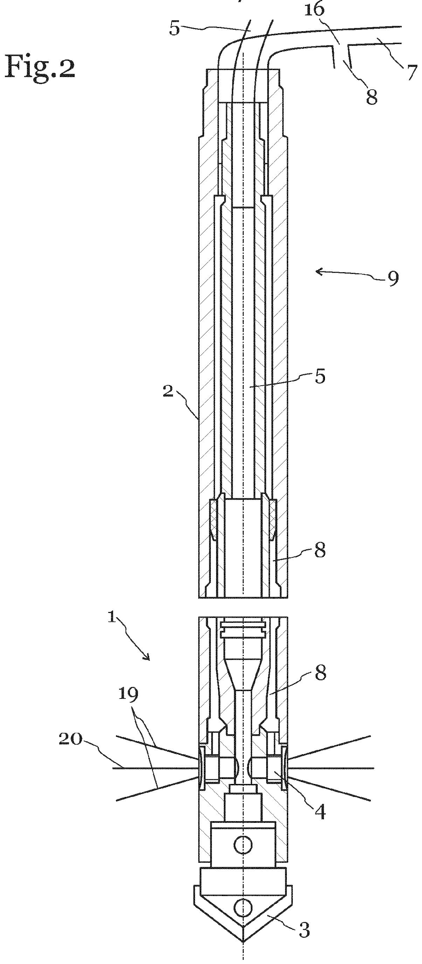

Währenddessen wird Bindemittel aus der Bindemittelleitung 5, Viskositätsregulator aus der Viskositätsregulatorleitung 7 und Druckluft aus der Druckluftleitung 8 in den Boden 13 abgegeben. Die Abgabe des Bindemittels erfolgt aus der Bindemittelausgabedüse 4, während die Abgabe des Viskositätsregulators und der Druckluft aus der Beinmengdüse 6 erfolgt. Die Bindemittelausgabedüse 4 und die Beimengdüse 6 sind zur Vereinfachung der Darstellung in Fig. 1 nicht gezeigt, dafür in Fig. 2 und Fig. 3 ersichtlich. Die Bindemitteldüse 4 umfasst eine Öffnung in der Injektionslanze 2, wodurch eine Ausgabe des Bindemittels in zur Längserstreckungsrichtung der Injektionslanze 2 orthogonaler Richtung bzw. in Querrichtung erfolgen kann. Beim Zurückziehen der Injektionslanze 2 wird diese bevorzugt in Rotationsrichtung 14 rotiert oder verschwenkt, wodurch in Verbindung mit dem Zurückziehen der Injektionslanze entlang des Zurückziehwegs 18 ein im Wesentlichen säulenförmiger Bindemittel-Boden-Gemisch-Körper 15, insbesondere ein DSV-Körper, gebildet wird.

Die Zuführung des Bindemittels in die Injektionslanze erfolgt aus dem Bindemittelreservoir 10 über eine Bindemittelleitung 5. Gegebenenfalls kann im Bindemittelreservoir 10 das Bindemittel, insbesondere die Bindemittelsuspension, hergestellt oder durchmischt werden.

Die Zuführung des Viskositätsregulators erfolgt aus dem Viskositätsregulatorreservoir 11 über die Viskositätsregulatorleitung 7. Der Viskositätsregulator wird über die Viskositätsregulatorleitung 7 in Richtung der Injektionslanze 2 gefördert. Vor dem Einbringen in die Injektionslanze 2 erfolgt im Bereich der Zumischöffnung 16 eine Vermischung des Viskositätsregulators mit Druckluft, die über eine Druckluftleitung 8 gefördert wird. Dadurch wird in der Druckluft ein Aerosol des Viskositätsregulators gebildet. Die Druckluft wird in einem Kompressor 12 generiert. Die Zumischöffnung 16 verbindet die Viskositätsregulatorleitung 7 und die Druckluftleitung 8.

Die Injektionslanze 2 wird vollständig in weiterer Folge aus dem Boden 13 entfernt, sie kann aber gegebenenfalls auch teilweise im Boden verbleiben.

Fig. 2 zeigt eine schematische Schnittansicht der Injektionslanze 2 des Ausführungsbeispiels aus Fig. 1. Dabei zeigt das Schnittbild einen Längsschnitt entlang der Zentralachse der Injektionslanze 2, wobei die Injektionslanze 2 zur vereinfachten Darstellung nicht in ihrer vollen Länge dargestellt ist.

Die Injektionslanze 2 weist an ihrer Spitze, also an jenem Ende der Injektionslanze 2, welches im bestimmungsgemäßen Betrieb der Anordnung zuerst in den Boden 13 eingeführt wird, eine Bohrkrone 3 auf. Die Bohrkrone 3 ist in diesem Ausführungsbeispiel rotierbar ausgeführt, um ein Eindringen der Injektionslanze 2 in den Boden 13 zu erleichtern.

Die Injektionslanze 2 umfasst in diesem Ausführungsbeispiel mehrere zueinander konzentrisch angeordnete Rohre. In diesem Ausführungsbeispiel ist das Bindemittel eine Zement-Wasser-Suspension, die vor dem Einbringen in die Bindemittelleitung 5 in einem außerhalb der Injektionslanze 2 angeordneten Bindemittelreservoir 10 gelagert und gegebenenfalls gemischt wird. Das Bindemittel wird unter Druckbeaufschlagung in die Bindemittelleitung 5 eingebracht. In diesem Ausführungsbeispiel kann der Druck des Bindemittels in der Bindemittelleitung 5 etwa 300 bar bis 400 bar betragen.

Die Bindemittelleitung 5 umgebend ist in konzentrischer Weise eine Viskositätsregulatorleitung 7 angeordnet. In diesem Ausführungsbeispiel wird der Viskositätsregulator der Druckluft zugeführt, wodurch ein Aerosol gebildet wird. Dadurch wirkt die Viskositätsregulatorleitung 7 gleichzeitig als Druckluftleitung 8. Der Druck in der Viskositätsregulatorleitung beträgt in diesem Ausführungsbeispiel beispielsweise 5 bar bis 15 bar.

Das Aerosol des Viskositätsregulators wird durch Beimengung des Viskositätsregulators in die Druckluft erzeugt. Alternativ kann das Aerosol des Viskositätsregulators in einer außerhalb der Injektionslanze 2 angeordneten Zerstäubungsvorrichtung erzeugt und über die Zumischöffnung 16 mit der Druckluft in der Druckluftleitung 8 vermischt werden.

Der Viskositätsregulator ist in diesem Ausführungsbeispiel eine etwa 7%ige (Gew.-%) Acrylatdispersion in Wasser. Alternativ kann der Viskositätsregulator eine Acrylatdispersion mit anderen Acrylatgehalten sein. Alternativ können auch andere Mittel als Viskositätsregulator eingesetzt werden.

Zur Durchführung eines erfindungsgemäßen Verfahrens zur Bildung von Bindemittel-Boden-Gemisch-Körpern 15, insbesondere zur Bildung von DSV-Körpern, wird die Injektionslanze 2 in den zu bearbeitenden Boden 13 eingeführt. Die Tiefe und Richtung der Einführung erfolgt dabei je nach Verwendungszweck der zu erzeugenden DSV-Körper und wird vom Fachmann an die jeweiligen Gegebenheiten angepasst.

Durch Rotieren der Bohrstange 9 kann die Bohrkrone 3 in Rotation versetzt werden, wodurch das Vordringen der Injektionslanze 2 in den Boden 13 erleichtert werden kann. Nach dem Vordringen der Injektionslanze 2 in die maximal gewünschte Tiefe des Bodens 13 erfolgt die eigentliche Bildung der Bindemittel-Bodengemisch-Körper 15. Die Injektionslanze 2 wird wieder aus dem Boden herausgezogen und aus der Bindemittelleitung 5 wird mit Druck beaufschlagtes Bindemittel über die Bindemittelausgabedüse 4 in den umliegenden Bodenbereich abgegeben. Durch den in der Bindemittelleitung 5 vorherrschenden Druck tritt das Bindemittel als energiereicher Bindemittelstrahl 20 aus der Bindemittelausgabedüse 4 aus, wodurch eine Vermischung des Bindemittels mit dem umliegenden Bodenmaterial stattfindet. Somit wird aus dem Bindemittel ein Bindemittel-Boden-Gemisch gebildet. Da in diesem Ausführungsbeispiel eine Zement-Wasser-Suspension als Bindemittel verwendet wird, wird durch diese Vermischung *in situ* eine Betonmischung hergestellt. Das umliegende, vorzugsweise durch den Bohr- und Injektionsvorgang aufgelockerte Bodenmaterial fungiert dabei als Zuschlag, der mit einer Zement-Wasser-Suspension vermengt wird. In diesem Ausführungsbeispiel stellen die Injektionslanze 2 und die Bohrstange 9 dasselbe Element dar.

Um eine gleichmäßige Verteilung des Bindemittels zu gewährleisten, kann die Injektionslanze 2 in Rotation versetzt werden, wodurch das Bindemittel kreisförmig oder spiralförmig aus den Bindemittelausgabedüsen 4 ausgegeben wird. So werden im Wesentlichen zylinderförmige Bindemittel-Bodengemisch-Körper 15 gebildet. Die Injektionslanze 2 wird bevorzugt kontinuierlich aus dem Boden 13 herausgezogen, wodurch beispielsweise langgestreckte, durchgängige Bereiche aus Bindemittel-Boden-Gemisch gebildet werden. Üblicherweise wird die Injektionslanze 2 vollständig aus dem Boden 13 herausgezogen.

Zusätzlich zur Ausgabe des Bindemittels aus der Bindemittelausgabedüse 4 erfolgt eine Zumischung des Viskositätsregulators über eine im Bereich der Bindemittelausgabedüse 4 angeordnete Beimengdüse 6. Die Beimengdüse 6 dient der Ausgabe eines Viskositätsregulator-Aerosols aus der als Viskositätsregulatorleitung 7 wirkenden Druckluftleitung 8. In diesem Ausführungsbeispiel ist die Beimengdüse 6 derart ausgeführt, dass der den Viskositätsregulator als Aerosol enthaltende Druckluftstrahl 19 den aus der Bindemittelausgabedüse 4 austretenden Bindemittelstrahl 20 ummantelt bzw. umhüllt, wobei der Druckluftstrahl 19 den Viskositätsregulator umfasst.

Der Bindemittelstrahl 20 tritt also gleichzeitig mit dem Viskositätsregulator und dem Druckluftstrahl 19 aus der Injektionslanze 2 aus, wodurch eine Vermischung mit dem Bodenmaterial erfolgt. Durch die viskositätserhöhende aber nicht aushärtebeschleunigende Wirkung des Viskositätsregulators wird ein mögliches Auswaschen des Bindemittels verlangsamt, wodurch die Bildung stabiler und durchgehender DSV-Körper insbesondere in stark wasserhaltigen bzw. wasserführenden Bodenbereichen verbessert werden kann.

Fig. 3 zeigt eine Detailansicht der Injektionslanze 2 aus Fig. 2, wobei der Bereich der Bindemittelausgabedüse 4 und der Beimengdüse 6 vergrößert dargestellt sind. Zu sehen ist die Bohrstange 9, die mit der Bohrkrone 3 verbunden ist. Zusätzlich sind die konzentrisch angeordnete Bindemittelleitung 5 und die als Viskositätsregulatorleitung 7 wirkende Druckluftleitung 8 gezeigt. Die Druckluftleitung 8 mündet in eine Beimengdüse 6 und die Bindemittelleitung mündet in eine Bindemittelausgabedüse 4. Der Bindemittelstrahl 20 und der Druckluftstrahl 19 sind ebenfalls schematisch dargestellt.

Gemäß einer nicht dargestellten Ausführungsform kann der Viskositätsregulator dem Bindemittel vor dessen Ausgabe beigemengt werden, sodass eine Mischung umfassend die Bindemittelsuspension und den Viskositätsregulator aus der Injektionslanze ausgegeben wird. Insbesondere kann die Beimengung des Viskositätsregulators in die Bindemittelsuspension in einem gewissen Abstand zur Bindemittelausgabedüse erfolgen, sodass der verbleibende Teil der Bindemittelleitung als Mischstrecke wirkt.

## Patentansprüche

1. **Verfahren** zur Bildung verfestigter Bindemittel-Boden-Gemisch-Körper (15) die gegebenenfalls eine langgestreckte Form aufweisen, insbesondere zur Bildung von Baugrubenumschließungen nach dem Düsenstrahlverfahren, umfassend folgende Schritte:
a) Einführen, insbesondere Einbohren, einer Injektionslanze (2) in den Boden (13),
b) anschließendes Zurückziehen der Injektionslanze aus dem Boden und gleichzeitiges Einbringen eines Bindemittels, insbesondere einer Bindemittelsuspension, in das entlang des Zurückziehweges umliegende Bodenmaterial (13), wodurch im Boden ein Abschnitt einer Mischung aus Bindemittel und Bodenmaterial gebildet wird,
wobei das Bindemittel mit oder in einem Hochdruckstrahl (20) aus der Injektionslanze in den Boden eingebracht wird, um das Bindemittel mit dem Bodenmaterial zu vermischen,
**dadurch gekennzeichnet, dass** dem Bindemittel und/oder dem Bindemittel-Boden-Gemisch (15) ein viskositätserhöhender, nicht-aushärtungsbeschleunigender, also nicht die Aushärtung der Grundmasse beschleunigender, Viskositätsregulator beigemengt wird.

2. Verfahren nach Anspruch 1, **dadurch gekennzeichnet,**
- **dass** ein den Bindemittelstrahl ummantelnder Druckluftstrahl (19) aus der Injektionslanze ausgegeben wird,
- und **dass** der Viskositätsregulator mit dem Druckluftstrom (19), vorzugsweise als Aerosol, eingebracht wird.

3. Verfahren nach Anspruch 2, **dadurch gekennzeichnet,**
- **dass** der Viskositätsregulator dem Druckluftstrahl (19) in einem Volumenstrom zugeführt wird, der 0,5-5% des gleichzeitig geförderten Volumenstroms der Bindermittelsuspension beträgt,
- oder dass der Viskositätsregulator dem Druckluftstrahl mit einem Volumenstrom von 0,5 l/min bis 30 l/min, insbesondere von 1 l/min bis 10 l/min, vorzugsweise von 2 l/min bis 5 l/min beigemengt wird, wobei der Volumenstrom der Bindemittelsuspension vorzugswese 200l/min bis 400l/min beträgt.

4. Verfahren nach einem der Ansprüche 2 oder 3, **dadurch gekennzeichnet, dass** der Druck der Druckluft zur Bildung des Druckluftstrahls (19) 1 bar bis 30 bar beträgt.

5. Verfahren nach einem der Ansprüche 1 bis 4, **dadurch gekennzeichnet, dass** der Druck des Bindemittels zur Bildung des Hochdruckstrahls (20) 100 bar bis 500 bar, insbesondere 300 bar bis 400 bar beträgt, und/oder dass das Bindemittel ein Zement-Wasser-Gemisch ist oder umfasst.

6. Verfahren nach einem der Ansprüche 1 bis 5, **dadurch gekennzeichnet, dass** das umliegende Bodenmaterial (13) beim Einführen und/oder beim Zurückziehen der Injektionslanze aufgelockert wird.

7. Verfahren nach einem der Ansprüche 1 bis 6, **dadurch gekennzeichnet, dass** der Viskositätsregulator aus Gelbildnern, modifizierter Stärke, Carboxymethylcellulose, Bentonit, Acrylatdispersion, modifizierten Polyacrylaten, Polyurethanen oder Polyethern besteht oder diese enthält.

8. Verfahren nach einem der Ansprüche 1 bis 7, **dadurch gekennzeichnet, dass** der Viskositätsregulator aus einer Acrylatdispersion besteht, wobei die Acrylatdispersion 1 Gew.-% bis 20 Gew.-%, insbesondere 2 Gew.-% bis 10 Gew.-% Acrylatpolymer enthält.

9. **Injektionsanordnung** zur Bildung, verfestigter Bindemittel-Boden-Gemisch-Körper, die gegebenenfalls eine langgestreckte Form aufweisen, insbesondere zur Bildung von Baugrubenumschließungen nach dem Düsenstrahlverfahren, umfassend:
- eine Injektionslanze (2) mit einer Bohrkrone (3) zur Einführung und insbesondere zur Einbohrung der Injektionslanze in den Boden,
- eine entlang der Injektionslanze (2) verlaufende und in eine Bindemittelausgabedüse (4) mündende Bindemittelleitung (5) zur Zuführung eines Bindemittels, insbesondere einer Bindemittelsuspension,
- und einen viskositätserhöhenden, nicht-aushärtungsbeschleunigenden Viskositätsregulator,
- wobei die Injektionslanze dazu ausgebildet ist, das Bindemittel mit oder in einem Hochdruckstrahl in den Boden einzubringen, um das Bindemittel mit dem Bodenmaterial zu vermischen,
**dadurch gekennzeichnet,**
- **dass** eine getrennt von der Bindemittelleitung (5) entlang der Injektionslanze (2) verlaufende und in eine Beimengdüse (6) mündende Viskositätsregulatorleitung (7) zur Beimengung des Viskositätsregulators in das Bindemittel und/oder in das Bindemittel-Boden-Gemisch vorgesehen ist.

10. Injektionsanordnung nach Anspruch 9, **dadurch gekennzeichnet, dass** eine getrennt von der Bindemittelleitung (5) entlang der Injektionslanze (2) verlaufende und in die Beimengdüse (6) mündende Druckluftleitung (8) vorgesehen ist.

11. Injektionsanordnung nach Anspruch 10, **dadurch gekennzeichnet, dass** die Druckluftleitung (8) gleichzeitig auch die Viskositätsregulatorleitung (7) bildet, und dass in der als Viskositätsregulatorleitung (7) wirkenden Druckluftleitung (8) eine Mischung aus Druckluft und Viskositätsregulator, insbesondere ein Aerosol des Viskositätsregulators, gefördert wird.

12. Injektionsanordnung nach einem der Ansprüche 9 bis 11, **dadurch gekennzeichnet, dass** der Viskositätsregulator aus Gelbildnern, modifizierter Stärke, Carboxymethylcellulose, Bentonit, Acrylatdispersion, modifizierten Polyacrylaten, Polyurethanen oder Polyethern besteht oder diese enthält.

13. Injektionsvorrichtung nach Anspruch 12, **dadurch gekennzeichnet, dass** der Viskositätsregulator aus einer Acrylatdispersion besteht, wobei die Acrylatdispersion 1 Gew.-% bis 20 Gew.-%, insbesondere 2 Gew.-% bis 10 Gew.-% Acrylatpolymer enthält.

14. Injektionsanordnung nach einem der Ansprüche 11 bis 13, **dadurch gekennzeichnet, dass** eine Zerstäubungsvorrichtung zur Bildung eines Viskositätsregulator-Aerosols vorgesehen ist, und dass die als Viskositätsregulatorleitung (7) wirkende Druckluftleitung (8) eine Zumischöffnung zur Einbringung des Viskositätsregulators aufweist.

15. Injektionsanordnung nach einem der Ansprüche 9 bis 14, **dadurch gekennzeichnet, dass** die Bindemittelausgabedüse (4) derart angeordnet ist, dass eine Ausgabe des Bindemittels, insbesondere der Bindemittelsuspension, quer zur Längserstreckungsrichtung der Injektionslanze (2) erfolgt.

## Claims

1. A method for forming solidified binder-soil mixture bodies (15) optionally having an elongated shape, in particular for forming excavation pit enclosures by jet grouting, comprising the following steps:
a) inserting, in particular drilling, an injection lance (2) into the soil (13),
b) subsequently withdrawing the injection lance from the soil and simultaneously introducing a binder, in particular a binder suspension, into the surrounding soil material (13) along the withdrawing path,
whereby a section of a mixture of binder and soil material in the soil is formed,
wherein the binder is introduced into the soil with or in a high pressure jet (20) from the injection lance to mix the binder with the soil material,
**characterised in that** a viscosity-increasing, non-curing-accelerating, i. e. not accelerating the curing of the base material, viscosity regulator is added to the binder and/or the binder-soil mixture (15).

2. The method according to claim 1, **characterised in**
- **that** a compressed air jet (19) enveloping the binder jet is emitted from the injection lance,
- And in that the viscosity regulator is introduced with the compressed air flow (19), preferably as an aerosol.

3. The method according to claim 2, **characterised in**
- **that** the viscosity regulator is supplied to the compressed air jet (19) in a volume flow which amounts to 0.5-5% of the simultaneously conveyed volume flow of the binder suspension,
- or in that the viscosity regulator is added to the compressed air jet with a volume flow of 0.5 l/min to 30 l/min, in particular of 1 l/min to 10 I/min, preferably of 2 l/min to 5 l/min, the volume flow of the binder suspension preferably being 200 l/min to 400 l/min.

4. The method according to one of claims 2 or 3, **characterised in that** the pressure of the compressed air for forming the compressed air jet (19) is 1 bar to 30 bar.

5. The method according to one of claims 1 to 4, **characterised in that** the pressure of the binder for forming the high pressure jet (20) is 100 bar to 500 bar, in particular 300 bar to 400 bar, and/or **in that** the binder is or comprises a cement-water mixture.

6. The method according to one of claims 1 to 5, **characterised in that** the surrounding soil material (13) is loosened during insertion and/or withdrawing of the injection lance.

7. The method according to one of claims 1 to 6, **characterised in that** the viscosity regulator consists of or contains gelling agents, modified starch, carboxymethyl cellulose, bentonite, acrylate dispersion, modified polyacrylates, polyurethanes or polyethers.

8. The method according to one of claims 1 to 7, **characterised in that** the viscosity regulator consists of an acrylate dispersion, wherein the acrylate dispersion contains 1% to 20% by weight, in particular 2% to 10% by weight, of acrylate polymer.

9. **An injection assembly** for forming solidified binder-soil mixture bodies optionally having an elongated shape, in particular for forming excavation pit enclosures by jet grouting, comprising:
- an injection lance (2) with a drill bit (3) for insertion and in particular for drilling the injection lance into the ground,
- a binder line (5) running along the injection lance (2) and opening into a binder discharge nozzle (4) for supplying a binder, in particular a binder suspension,
- and a viscosity-increasing, non-curing accelerating viscosity regulator,
- wherein the injection lance is designed to inject the binder into the soil with or in a high pressure jet to mix the binder with the soil material,
**characterised**
- **in that** a viscosity regulator line (7) running separately from the binder line (5) along the injection lance (2) and opening into an admixing nozzle (6) is provided for admixing the viscosity regulator into the binder and/or into the binder-soil mixture.

10. The injection assembly according to claim 9, **characterised in that** a compressed air line (8) is provided running separately from the binder line (5) along the injection lance (2) and opening into the admixing nozzle (6).

11. The injection assembly according to claim 10, **characterised in that** the compressed air line (8) also forms the viscosity regulator line (7), and **in that** a mixture of compressed air and viscosity regulator, in particular an aerosol of the viscosity regulator, is conveyed in the compressed air line (8) acting as viscosity regulator line (7).

12. The injection assembly according to one of claims 9 to 11, **characterised in that** the viscosity regulator consists of or contains gelling agents, modified starch, carboxymethyl cellulose, bentonite, acrylate dispersion, modified polyacrylates, polyurethanes or polyethers.

13. The injection assembly according to claim 12, **characterised in that** the viscosity regulator consists of an acrylate dispersion, wherein the acrylate dispersion contains 1% to 20% by weight, in particular 2% to 10% by weight, of acrylate polymer.

14. The injection assembly of one of claims 11 to 13, **characterised in that** an atomising device is provided for forming a viscosity regulator aerosol, and **in that** the compressed air line (8) acting as a viscosity regulator line (7) has an admixing opening for introducing the viscosity regulator.

15. The injection assembly according to one of claims 9 to 14, **characterised in that** the binder discharge nozzle (4) is arranged in such a way that a discharge of the binder, in particular of the binder suspension, takes place transversely to the longitudinal extension direction of the injection lance (2).

## Revendications

1. Procédé de formation de corps solidifiés de mélange liant-sol (15) qui présentent éventuellement une forme allongée, en particulier pour la formation d'enceintes de fouilles selon le procédé à jet de buse, comprenant les étapes suivantes :
a) introduction, en particulier le percement, d'une lance d'injection (2) dans le sol (13),
b) retrait subséquent de la lance d'injection hors du sol et introduction simultanée d'un liant, en particulier d'une suspension de liant, dans le matériau du sol (13) entourant le long du trajet de retrait,
ce qui permet de former dans le sol une section d'un mélange de liant et de matériau du sol,
dans lequel le liant est introduit dans le sol avec ou dans un jet à haute pression (20) provenant de la lance d'injection afin de mélanger le liant avec le matériau du sol,
**caractérisé en ce qu'**un régulateur de viscosité augmentant la viscosité, n'accélérant pas le durcissement, donc n'accélérant pas le durcissement de la masse de base, est ajouté au liant et/ou au mélange liant-sol (15).

2. Procédé selon la revendication 1, **caractérisé en ce qu'**un jet d'air comprimé (19) enrobant le jet de liant est émis par la lance d'injection, et **en ce que** le régulateur de viscosité est introduit avec le flux d'air comprimé (19), de préférence sous forme d'aérosol.

3. Procédé selon la revendication 2, **caractérisé en ce que** le régulateur de viscosité est amené au jet d'air comprimé (19) dans un flux volumique qui représente 0,5-5% du flux volumique de la suspension de liant transportée simultanément,
- ou **en ce que** le régulateur de viscosité est ajouté au jet d'air comprimé avec un flux volumique de 0,5 l/min à 30 l/min, en particulier de 1 l/min à 10 l/min, de préférence de 2 l/min à 5 l/min, le flux volumique de la suspension de liant étant de préférence de 200 l/min à 400 l/min.

4. Procédé selon l'une des revendications 2 ou 3, **caractérisé en ce que** la pression de l'air comprimé pour former le jet d'air comprimé (19) est comprise entre 1 bar et 30 bar.

5. Procédé selon l'une des revendications 1 à 4, **caractérisé en ce que** la pression du liant pour former le jet à haute pression (20) est de 100 bars à 500 bars, en particulier de 300 bars à 400 bars, et/ou **en ce que** le liant est ou comprend un mélange ciment-eau.

6. Procédé selon l'une des revendications 1 à 5, **caractérisé en ce que** le matériau du sol environnant (13) est ameubli lors de l'introduction et/ou du retrait de la lance d'injection.

7. Procédé selon l'une des revendications 1 à 6, **caractérisé en ce que** le régulateur de viscosité est constitué par ou contient des gélifiants, de l'amidon modifié, de la carboxyméthylcellulose, de la bentonite, une dispersion d'acrylate, des polyacrylates modifiés, des polyuréthanes ou des polyéthers.

8. Procédé selon l'une des revendications 1 à 7, **caractérisé en ce que** le régulateur de viscosité est constitué d'une dispersion d'acrylate, la dispersion d'acrylate contenant de 1 % en poids à 20 % en poids, en particulier de 2 % en poids à 10 % en poids de polymère d'acrylate.

9. **Dispositif d'injection** pour la formation de corps solidifiés de mélange liant-sol qui présentent éventuellement une forme allongée, en particulier pour la formation d'enceintes de fouilles selon le procédé à jet de buse, comprenant :
- une lance d'injection (2) avec une couronne de forage (3) pour l'introduction et en particulier pour le percement de la lance d'injection dans le sol,
- une conduite de liant (5) s'étendant le long de la lance d'injection (2) et débouchant dans une buse de distribution de liant (4) pour l'amenée d'un liant, en particulier d'une suspension de liant,
- et un régulateur de viscosité augmentant la viscosité et n'accélérant pas le durcissement,
- dans lequel la lance d'injection est conçue pour introduire le liant dans le sol avec ou dans un jet à haute pression afin de mélanger le liant avec le matériau du sol,
**caractérisé**
- **en ce qu'**il est prévu une conduite de régulateur de viscosité (7) s'étendant séparément de la conduite de liant (5) le long de la lance d'injection (2) et débouchant dans une buse d'ajout (6) pour ajouter le régulateur de viscosité dans le liant et/ou dans le mélange liant-sol.

10. Dispositif d'injection selon la revendication 9, **caractérisé en ce qu'**il est prévu une conduite d'air comprimé (8) séparée de la conduite de liant (5), s'étendant le long de la lance d'injection (2) et débouchant dans la buse d'ajout (6).

11. Dispositif d'injection selon la revendication 10, **caractérisé en ce que** la conduite d'air comprimé (8) forme en même temps également la conduite de régulateur de viscosité (7), et **en ce qu'**un mélange d'air comprimé et de régulateur de viscosité, en particulier un aérosol de régulateur de viscosité, est transporté dans la conduite d'air comprimé (8) fonctionnant comme conduite de régulateur de viscosité (7).

12. Dispositif d'injection selon l'une des revendications 9 à 11, **caractérisé en ce que** le régulateur de viscosité est constitué par ou contient des gélifiants, de l'amidon modifié, de la carboxyméthylcellulose, de la bentonite, une dispersion d'acrylate, des polyacrylates modifiés, des polyuréthanes ou des polyéthers.

13. Dispositif d'injection selon la revendication 12, **caractérisé en ce que** le régulateur de viscosité est constitué d'une dispersion d'acrylate, la dispersion d'acrylate contenant de 1 % en poids à 20 % en poids, en particulier de 2 % en poids à 10 % en poids de polymère d'acrylate.

14. Dispositif d'injection selon l'une des revendications 11 à 13, **caractérisé en ce qu'**un dispositif de nébulisation est prévu pour former un aérosol de régulateur de viscosité, et **en ce que** la conduite d'air comprimé (8) fonctionnant comme conduite de régulateur de viscosité (7) présente un orifice de mélange pour introduire le régulateur de viscosité.

15. Dispositif d'injection selon l'une des revendications 9 à 14, **caractérisé en ce que** la buse de distribution de liant (4) est disposée de telle sorte qu'une distribution du liant, en particulier de la suspension de liant, est effectuée transversalement à la direction d'extension longitudinale de la lance d'injection (2).
